# EUROPEAN PATENT APPLICATION

(11) **EP 3 404 609 A1**
(43) Date of publication of application: **21.11.2018**
(21) Application number: 16884877.8
(22) Date of filing: 12.01.2016
(51) Int. Cl.: G06Q 50/04, G06Q 50/10

(54) **IMAGE DISPLAY DEVICE**

(71) Applicant: Suncorporation, Konan-shi Aichi 483-8555 (JP)
(72) Inventor: IWATA Jun, Konan-shi Aichi 483-8555 (JP)
(74) Representative: Rupprecht, Kay
(86) International application number: PCT/JP2016/050674
(87) International publication number: WO 2017/122274

(57) **Abstract**

While an instruction screen indicating a procedure for handling a target article is displayed on a display unit 14, a controller 26 of an image display device 10 determines whether or not an operation that a user actually performed on a target article follows the procedure instructed in the instruction screen based on a first captured image acquired from a first camera 16 and a second captured image acquired from a second camera 18. The controller 26 is configured to record a result thereof in a procedure list, and store the procedure list in a memory.

## Description

### TECHNICAL FIELD

The technique disclosed herein relates to an image display device configured to be used by being worn on a head of a user.

### BACKGROUND ART

For example, JP 2014-93050 A (hereinbelow termed Patent Literature 1) describes an image display device used by being worn on a user's head. This type of image display device is provided with a display unit configured to display an image of a range corresponding to a user's view (that is, a reality image) and a computer configured to compose an object image, which indicates an object related to an image to be displayed on the display unit, to the reality image displayed on the display unit and causing them to be displayed. As such, a technique which enhances and expands the world of reality perceivable to a human by using a computer is known as Augmented Reality (AR).

### SUMMARY OF INVENTION

### TECHNICAL PROBLEM

In the image display device of Patent Literature 1, a situation may be expected in which, while an article image of a target article is being displayed on the display unit, an object image indicating a manual related to handling of the target article is to be displayed in combination with the article image on the display unit.

However, even in such a case, the image display device cannot determine whether or not the target article was actually handled in accordance with a procedure which the manual instructs, so users and the like cannot confirm whether or not the target article was handled in accordance with the procedure which the manual instructs.

In this description, a technique that enables users and the like to confirm whether or not a target article was handled in accordance with a procedure instructed by a manual.

An image display device disclosed herein may be configured to be used by being worn on a head of a user. The image display device may comprise: a display unit; a first camera configured to capture a specific range corresponding to a range of view of the user; a second camera provided in a different position from the first camera, and configured to capture the specific range; a sensor configured capable of detecting a posture of the image display device; a controller; and a memory configured to store a manual related to handling of a target article. The controller may be configured to: specify spatial information for specifying features of a space around the image display device based on a first calibration image acquired from the first camera and a second calibration image acquired from the second camera; specify a position and a posture of the image display device in the space based on the spatial information, a first captured image acquired from the first camera, a second captured image acquired from the second camera, and the posture of the image display device detected by the sensor; cause the display unit to display a first instruction screen in a case where the target article is included in the specific range, the first instruction screen including a first object image in combination with the target article, the first object image indicating a first procedure for handling the target article in accordance with the manual stored in the memory; determine whether an operation that the user actually performed on the target article in the specific range follows the first procedure or not based on the first captured image and the second captured image while the first instruction screen is displayed on the display unit; and cause the memory to store a result of the determination.

According to the above configuration, while the first instruction screen is displayed on the display unit, the controller determines whether or not the operation that the user actually performed on the target article in the specific range follows the first procedure based on the first captured image and the second captured image, and causes the memory to store this determination result. Due to this, by confirming the determination result stored in the memory, users and the like can confirm whether or not the target article was handled in accordance with the procedures instructed by the manual.

Here, the "first captured image" may be a same image as the "first calibration image" or an image different therefrom. Similarly, the "second captured image" may be a same image as the "second calibration image" or an image different therefrom. Here, "handling of the target article" includes various work for handling the target article, such as assembly, disassembly, use, and repair of the target article. The "first object image" includes both still images and video images.

A controlling method, a computer program, and a computer-readable recording medium storing the computer program for implementing the image display device as above are also novel and useful.

### BRIEF DESCIPRIOTN OF DRAWINGS

FIG. 1 shows an overview of a communication system.
FIG. 2 shows a block diagram of the communication system of FIG. 1.
FIG. 3 shows a flowchart of a display device process.
FIG. 4 shows an example of a calibration screen.
FIG. 5 shows an example of a real-time process.
FIG. 6 shows an example of a menu object image.
FIG. 7 shows an example of a manual process.
FIG. 8 shows an example of an article table.
FIG. 9 shows an example of a procedure list.
FIG. 10 shows another example of the procedure list.
FIG. 11 shows an example of a target article.
FIG. 12 shows an example (1) of an instruction screen.
FIG. 13 shows an example (2) of the instruction screen.
FIG. 14 shows an example of the target article after work completion.
FIG. 15 shows an outer appearance of an image display device of a second embodiment.

### DETAILED DESCRIPTION

Primary features of embodiments described below will be listed. The technical elements described herein are each independent technical elements, which exhibit technical usefulness solely or in various combinations, and are not limited to combinations recited in the claims as originally filed.

(Feature 1) The controller may be configured to cause the display unit to display a second instruction screen instead of the first instruction screen in a case where it is determined that the operation follows the first procedure, the second instruction screen including a second object image in combination with the target article, the second object image indicating a second procedure to be performed after the first procedure in accordance with the manual stored in the memory. The "second object image" includes both a still image and a video image.

According to this configuration, the second instruction screen is displayed on the display unit in a case where it is determined that the operation follows the first procedure. That is, the controller may not display the second instruction screen on the display unit in a case where it is determined that the operation does not follow the first procedure. Due to this, a possibility by which a user can properly handle the target article in accordance with the procedures indicated by the manual becomes higher.

(Feature 2) The image display device may comprise: a receiving unit configured to receive action information related to an action content of a tool from the tool. The operation may include an operation of using the tool. The controller may be configured to determine whether the operation follows the first procedure or not based on the first captured image, the second captured image, and the action information acquired from the receiving unit while the first instruction screen is displayed on the display unit.

According to this configuration, the controller determines whether or not the operation follows the first procedure based on the action information acquired from the tool via the receiving unit in addition to the first captured image and the second captured image. Due to this, according to the above configuration, the controller can more suitably determine whether or not the operation follows the first procedure.

(Feature 3) The image display device may further comprise a sending unit configured to send information to an external server. The image display device may send work information including the result of the determination stored in the memory to the external server via the sending unit.

According to this configuration, the controller sends the work information including the determination result stored in the memory to the external server via the sending unit. Due to this, the external server accumulates the work information. An administrator and the like of the external server can browse through the accumulated work information to confirm whether or not the target article was handled properly.

Further, in the disclosure herein, a computer program for a terminal device configured to communicate with the external server storing the work information sent by an image display device as above. The terminal device is provided with a display unit and a computer. The computer program causes the computer to perform receiving the work information from the external server by communicating with the external server, and causing the display unit to display a browse screen represented by the received work information.

According to this configuration, a user of the terminal device can browse through the browse screen displayed on the display unit to confirm whether or not the target article was handled properly.

### (First Embodiment)

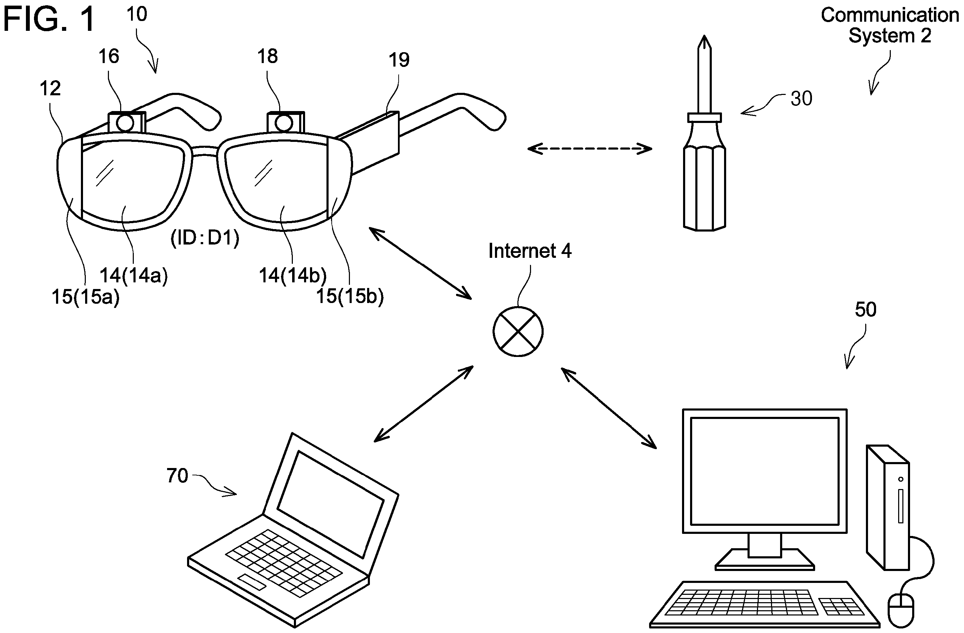

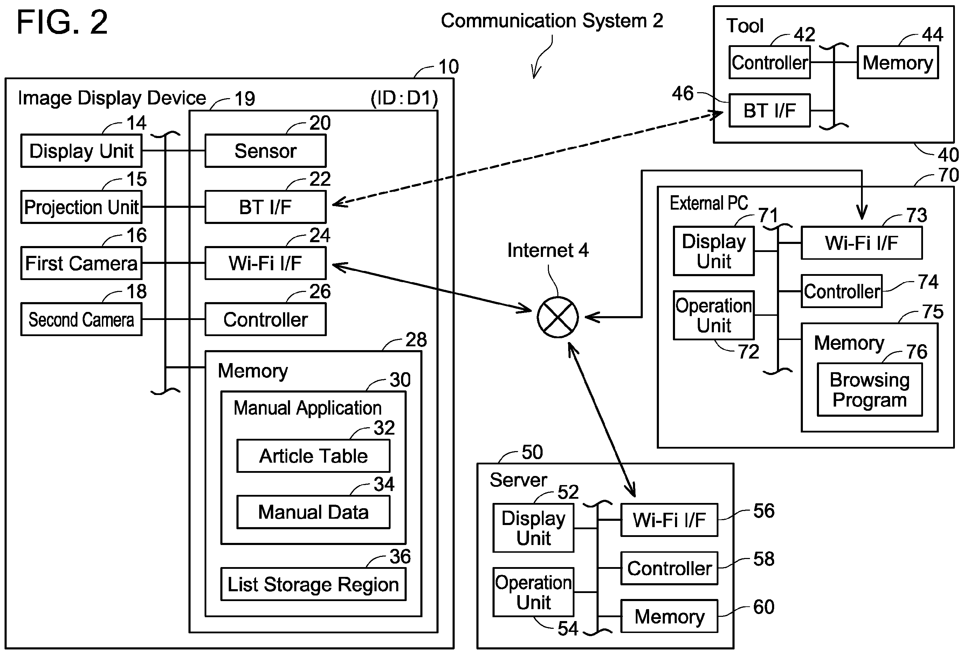

### (Configuration of communication system 2; FIGS. 1 and 2)

As shown in FIGS. 1 and 2, a communication system 2 includes an image display device 10, a tool 40, a server 50, and an external PC (abbreviation of Personal Computer) 70. The image display device 10, the server 50, and the external PC 70 are configured capable of wirelessly communicating with each other (specifically by Wi-Fi communication) via the Internet 4 (see solid arrows in the drawings). Further, the image display device 10 and the tool 40 are configured capable of communicating with each other by Bluetooth (registered trademark) communication (which is hereinbelow termed "BT communication") (see broken arrows in the drawings).

### (Configuration of image display device 10)

The image display device 10 shown in FIG. 1 is an image display device used by being worn on a head of a user (a so-called head-mount display). The image display device 2 includes a support body 12, display units 14a, 14b, projection units 15a, 15b, a first camera 16, a second camera 18, and a control box 19.

The support body 12 is a member in a shape of a glass frame. The user can wear the image display device 10 on the head by wearing the support body 12 as one would wear glasses.

The display units 14a, 14b are transparent display unit members, respectively. When the user wears the image display device 10 on the head, the display unit 14a is arranged at a position facing a right eye of the user and the display unit 14b is arranged at a position facing a left eye of the user. Hereinbelow, the left and right display units 14a, 14b may collectively be called a display unit 14.

The projection units 15a, 15b are members configured to project images on the display units 14a, 14b. The projection units 15a, 15b are provided at lateral sides of the display units 14a, 14b. Hereinbelow, the left and right projection units 15a, 15b may collectively be called a projection unit 15. In this embodiment, the projection unit 15 projects a predetermined object image on the display unit 14 in accordance with an instruction from a controller 26. Due to this, the user can see an object in the real world and/or in a space and the object image as if object image is composed over the object in the real world visible to the user and/or at a predetermined position in the space through the display unit 14. Hereinbelow, in this description, an explanation of operations of the projection unit 15 will be omitted when explaining about the controller 26 causing the display unit 14 to display a desired image by instructing the projection unit 15 to project this image, and this may be expressed simply as "the controller 26 causes the display unit 14 to display the desired image".

The first camera 16 is a camera arranged on the support body 12 at a position above the display unit 14a (that is, at a position corresponding to the right eye of the user). On the other hand, the second camera 18 is a camera arranged on the support body 12 at a position above the display unit 14b (that is, at a position corresponding to the left eye of the user). Each of the first camera 16 and the second camera 18 allows to capture a range corresponding to a range of view of the user wearing the image display device 10 (hereinbelow termed a "specific range") from different angles.

The control box 19 is a box attached to a part of the support body 12. The control box 19 accommodates respective elements functioning as a control system of the image display device 10. Specifically, as shown in FIG. 2, the control box 19 accommodates a sensor 20, a BT interface 22, a Wi-Fi interface 24, the controller 26, and a memory 28. Hereinbelow, an interface is denoted as "I/F".

The sensor 20 is a triaxial acceleration sensor. The sensor 20 detects acceleration along three axes being X, Y, and Z axes. The controller 26 is configured capable of specifying a posture and a motion state of the image display device 10 using detection values from the sensor 20.

The BT I/F 22 is an I/F configured to perform BT communication with an external device (for example, the tool 40).

The Wi-Fi I/F 24 is an I/F configured to perform Wi-Fi communication with an external device (for example, the server 50) via the Internet 4.

The controller 26 is configured to perform various processes according to programs stored in the memory 28. Contents of the processes that the controller 26 performs will be described later in detail. Further, the controller 26 is electrically connected to the display unit 14, the projection unit 15, the first camera 16, the second camera 18, the sensor 20, the BT I/F 22, the Wi-Fi I/F 24, and the memory 28, and is configured to control operations of these elements.

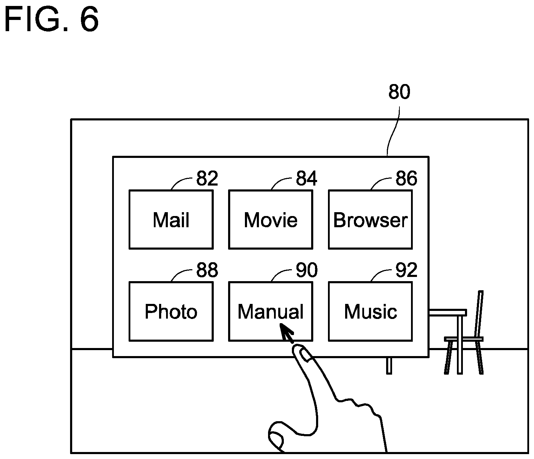

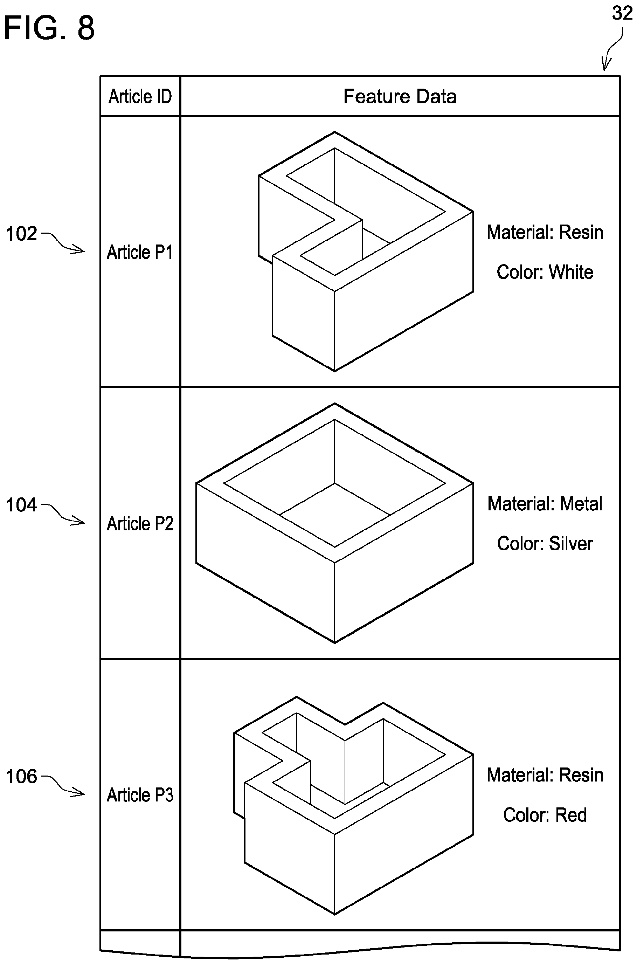

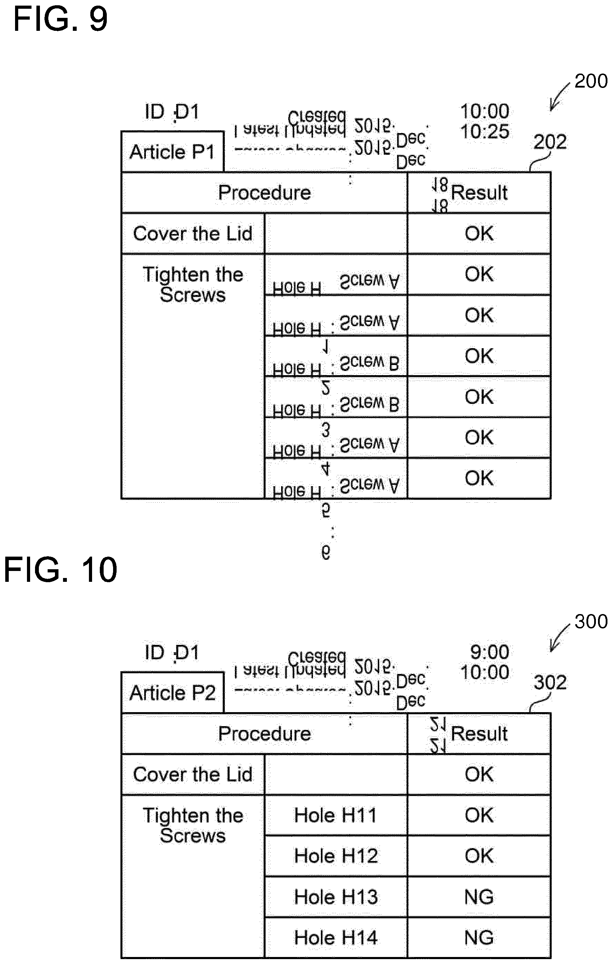

The memory 28 stores various programs. The programs include various types of programs such as a manual application program 30. In FIG. 2, the manual application program 30 is indicated as "manual app 30". Hereinbelow, the manual application may in some cases simply be termed "manual app". Here, the "manual app" is an application for providing instructions on a method of handling an article (such as assembly, disassembly, use, and repair thereof) by using reality images and object images (that is, virtual images). The controller 26 performs a manual process to be described later (see FIG. 6) in accordance with the manual app 30. The manual app 30 includes an article table 32 (see FIG. 8) and manual data 34. The article table 32 includes data related to the article of which handling method is instructed in accordance with the manual app 30. Contents of the article table 32 will be described later in detail. The manual data 34 includes a manual explaining the handling method for each of a plurality of articles. Moreover, the memory 28 further includes a list storage region 36 for storing a procedure list (see FIGS. 8 and 9) to be created according to the manual process to be described later (see FIG. 6). Further, the memory 28 also stores an ID allocated to the image display device 10. As shown in FIGS. 1 and 2, the ID of the image display device 10 of the present embodiment is "D1".

In the example of FIG. 1, only one image display device 10 is depicted, however, the actual communication system 2 may have plural image display devices 10 existing therein. In this case, a different ID is allocated to each of the image display devices 10.

### (Configuration of tool 40)

As shown in FIG. 1, the tool 40 is a tool for turning screws which the user holds and uses (a so-called screwdriver). As shown in FIG. 2, the tool 40 includes a controller 42, a memory 44, and a BT I/F 46.

The BT I/F 46 is an I/F configured to perform BT communication with an external device (for example, the image display device 10). The controller 42 is configured to perform sending action information related to an action content of the tool to the image display device 10 via the BT I/F 46 in accordance with a program stored in the memory 44. Specifically, the controller 42 detects a torque value upon tightening a screw, and performs the process of sending the action information including the detected torque value to the image display device 10 via the BT I/F 46. The memory 44 stores various programs.

In the example of FIG. 1, only one tool 40 is indicated, however, the actual communication system 2 may have plural tools 40 existing therein.

### (Configuration of server 50)

The server 50 of FIGS. 1 and 2 is a server installed by an administrator of the image display device 10 (such as an enterprise who provides the image display device 10). The server 50 manages handling history of articles by user of the image display device 10. The server 50 includes a display unit 52, an operation unit 54, a Wi-Fi I/F 56, a controller 58, and a memory 60.

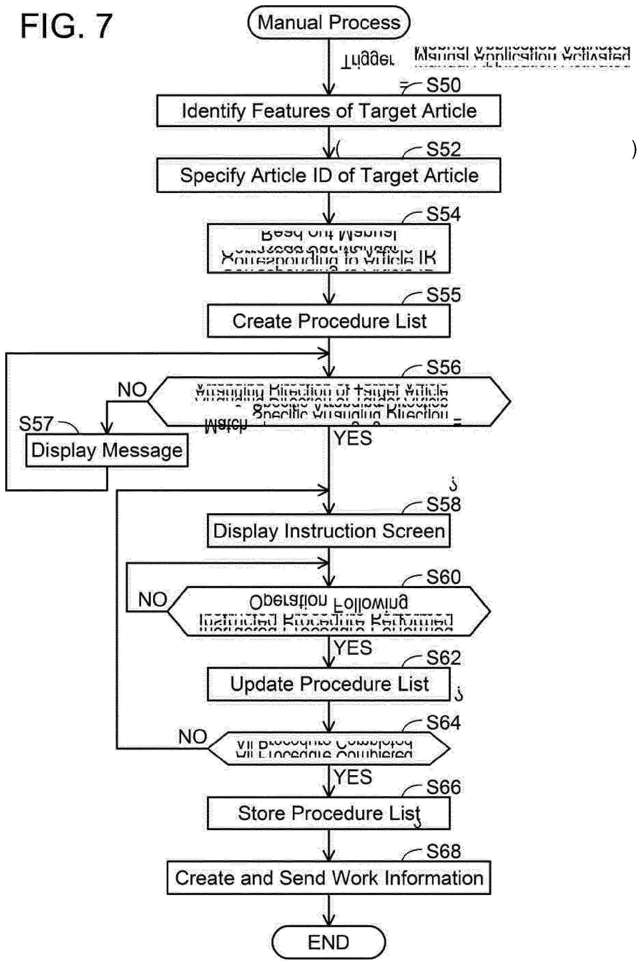

The display unit 52 is a display configured to display various types of information. The operation unit 54 includes a keyboard and a mouse. A user of the server 50 can input various instruction to the server 50 by operating the operation unit 54. The Wi-Fi I/F 56 is an I/F for performing Wi-Fi communication with an external device (for example, the image display device 10 and the external PC 70) via the Internet 4. The controller 58 is configured to perform various processes in accordance with programs stored in the memory 60. The memory 60 stores various programs. Further, the memory 60 stores work information received from the image display device 10 when the image display device 10 performs a manual process (see FIG. 7).

### (Configuration of external PC 70)

The external PC 70 in FIGS. 1 and 2 is a PC used by the administrator of the image display device 10 (such as the enterprise who provides the image display device 10). The external PC 70 is used to access the server 50 to browse the handling history of articles by the user of the image display device 10. The external PC 70 also includes a display unit 71, an operation unit 72, a Wi-Fi I/F 73, a controller 74, and a memory 75, similar to the server 50.

The display unit 71 is a display configured to display various types of information. The operation unit 72 includes a keyboard. A user of the external PC 70 can input various instruction to the external PC 70 by operating the operation unit 72. The Wi-Fi I/F 73 is an I/F for performing Wi-Fi communication with the server 50 via the Internet 4. The controller 74 is configured to perform various processes in accordance with programs stored in the memory 75. The memory 75 stores various programs. In the present embodiment, the memory 75 especially stores a browsing program 76 used for the external PC 70 to communicate with the server 50 to browse the work information stored in the server 50.

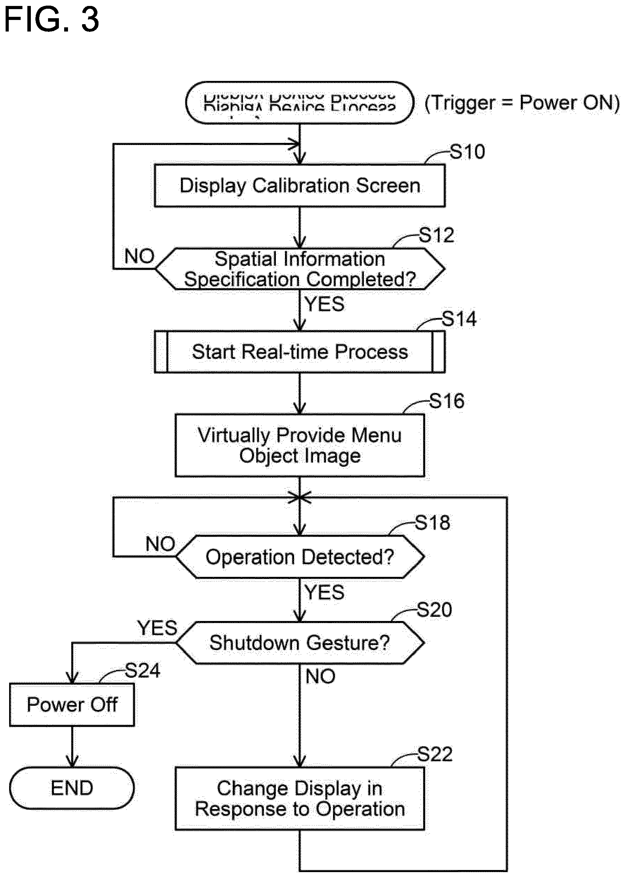

### (Display device process; FIG. 3)

A display device process executed by the controller 26 of the image display device 10 of the present embodiment will be described with reference to FIG. 3. When the user wears the image display device 10 on his head and turns on a power of the image display device 10, the controller 26 initiates the display device process of FIG. 3.

In S10, the controller 26 displays a predetermined calibration screen on the display unit 14. The calibration screen is a screen for allowing the user to perform calibration. Here, "calibration" is a process for specifying spatial information (that is, calibration data) for specifying features in a surrounding space of the image display device 10. Further, the "features in the surrounding space of the image display device 10" includes, for example, various types of information for characterizing an indoor space in a case where the image display device 10 exists indoors, such as a distance between a wall and the device, a direction of the wall, a distance between a ceiling and the device, a height of the ceiling, an area of a floor, a position of furniture, a distance to the furniture, and the like. On the other hand, for example, in a case where the image display device 10 exists outdoors, the "features in the surrounding space of the image display device 10" includes various types of information for characterizing the surrounding space of the device, such as a distance to a target object in the surroundings.

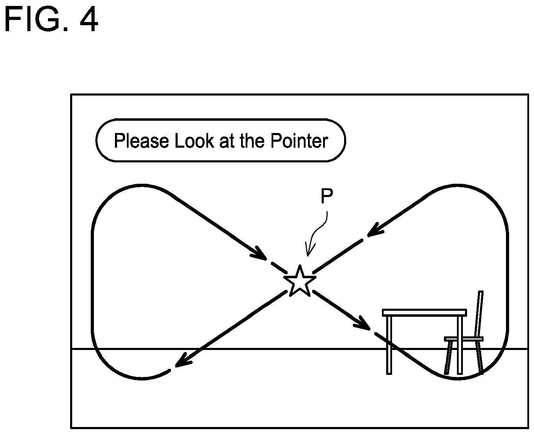

FIG. 4 shows an example of the calibration screen. As shown in the example of FIG. 4, the calibration screen includes a pointer P and a message prompting the user to keep looking at the pointer. The controller 26 moves the pointer P within the display unit 14 so that an entirety of the surrounding space of the image display device 10 can be included in view by the user following the pointer P with his eyes.

In subsequent S12, the controller 26 monitors completion of the specification of the spatial information. As aforementioned, by the user performing an operation to follow the pointer P with his eyes (that is, the user moves the head according to a motion of the pointer P) after the calibration screen (see FIG. 4) is displayed on the display unit 14 in S10, plural directions of the surrounding space are captured by the first camera 16 and the second camera 18. At this occasion, the controller 26 acquires a first calibration image being an image of the specific range (that is, the range corresponding to the range of view of the user) captured by the first camera 16 from the first camera 16, and acquires a second calibration image being an image of the specific range captured by the second camera 18 from the second camera 18. The controller 26 specifies feature points that are common to the first and second calibration images, and executes triangulation to calculate distances between the feature points and the image display device 10. Further, the controller 26 can also specify a coordinate of a position of each feature point with a coordinate of an initial position of the pointer P as a reference. The controller 26 performs similar processes for each of the plural feature points existing in all directions surrounding the image display device 10. In a case where a distance to the feature point and the coordinate of the feature point are specified for each of the plural feature points existing in all directions surrounding the image display device 10, the controller 26 determines YES in S12 and proceeds to S14. That is, the "spatial information for specifying the features of the surrounding space of the image display device 10" in S12 means the distances to the respective feature points and the coordinates of these feature points.

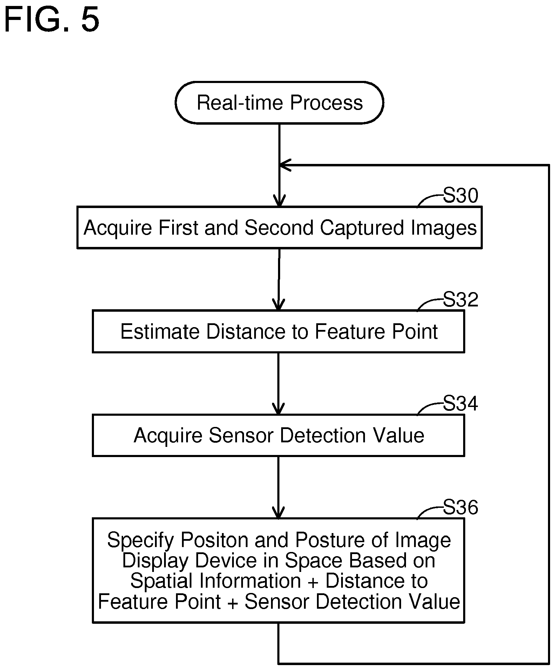

In S14, the controller 26 initiates a real-time process (see FIG. 5). When the real-time process is initiated in S14, the controller 26 executes the real-time process repeatedly until the power of the image display device 10 is turned off. After having initiated the real-time process in S14, the controller 26 proceeds to S16. Hereinbelow, contents of the real-time process will be described with reference to FIG. 5.

### (Real-time process; FIG. 5)

In S30 of FIG. 5, the controller 26 acquires a first captured image from the first camera 16, this image being an image of the specific range captured by the first camera 16 at a timepoint of S30, and acquires a second captured image from the second camera 18, this image being an image of the specific range captured by the second camera 18 at the timepoint of S30. That is, the first and second captured images acquired in S30 are both real-time captured images corresponding to the current range of view of the user.

In subsequent S32, the controller 26 calculates a distance between a specified feature point, which is found commonly in the first and second captured images, and the image display device 10. The "feature point" mentioned herein is for example one of the plural feature points included in the spatial information (case of YES in S12 of FIG. 3). The distance between the feature point and the image display device 10 is calculated by executing triangulation using the first and second captured images similar to the case described above.

In subsequent S34, the controller 26 calculates the posture of the image display device 10 at this timepoint based on the detection values of the sensor 20. Specifically, the controller 26 calculates tilt angles (θx, θy, θz) of X-axis, Y-axis, and Z-axis in a case of setting a direction of gravity as 0° based on the detection values of the sensor 20 (that is, acceleration in each axis direction of the X-axis, Y-axis, and Z-axis), and calculates the posture of the image display device 10 (that is, its tilt relative to a horizontal plane) at this timepoint of S10 based on these tilt angles.

In subsequent S36, the controller 26 uses the spatial information specified in the case of YES in S12 of FIG. 3, the distances to the feature points calculated in S32, and the posture of the image display device 10 calculated in S34 to specify a position and a posture of the image display device 10 in the space where the image display device 10 exists.

After completing S36, the controller 26 returns to S30 and executes the respective processes of S30 to S36 repeatedly. That is, the controller 26 can specify the position and the posture of the image display device 10 in the space where the image display device 10 exists on real-time basis by executing the processes of S30 to S36 repeatedly.

### (Continuation of display device process: from S16 of FIG. 3)

As above, when the controller 26 initiates the real-time process (see FIG. 5) in S14 of FIG. 3, it proceeds to S16. In S16, the controller 26 creates a menu object image representing a main menu object, and corresponds it to a predetermined position. In other words, the controller 26 creates the menu object image and arranged it virtually at the predetermined position. Here, "virtually arranging the menu object image at the predetermined position" means corresponding the menu object image to the predetermined position so that a screen in a state of having the menu object image arranged at the predetermined position in the space is displayed on the display unit 14 in a case where the specific range (that is, captured ranges of the first camera 16 and the second camera 18) includes the predetermined position. In S16, the controller 26 designates a position in front of the view of the user as the predetermined position and virtually arranges the menu object image. Due to this, at a timepoint upon the process of S16, the specific range (that is, the range of view of the user) includes the predetermined position. Due to this, as shown in FIG. 6, the display unit 14 displays the screen in the state of having the menu object image 80 indicating the menu object arranged at the predetermined position in the space is displayed. In this embodiment, since the display unit 14 is a transparent display, the user can see a display in which the menu object image 80 is composed to a real-life component (that is, a sight in a room) visible to the user through the display unit 14.

As shown in FIG. 6, the menu object image 80 represents the main menu. The menu object image 80 displays six icons 82 to 92 which can be selected. Each icon corresponds to an application. For example, the icon 82 indicates a mail application, the icon 84 indicates a movie application, the icon 86 indicates a browser application, the icon 88 indicates a photo application, the icon 90 indicates a manual application, and the icon 92 indicates a music application. The user can activate an application corresponding to a desired icon by performing a gesture to touch a desired icon in the specific range.

In subsequent S18, the controller 26 monitors detection of the user operation in the specific range. Here, the "user operation in the specific range" includes various operations such as the gesture that the user performs to the object image such as the menu object image (for example, a gesture to instruct moving the image or changing a size thereof, a gesture to instruct terminating display of the image, a gesture to select an icon, a gesture to instruct turning the power of the image display device 10 off, etc.), a movement of the user in the space, changing a direction of the view of the user, and the like. In S18, the controller 26 determines whether or not the user performed the operation in the specific range based on the first captured image from the first camera 16, the second captured image from the second camera 18, and the detection values from the sensor 20. When the user having performed the operation in the specific range is detected, the controller 26 determines YES in S18 and proceeds to S20.

In S20, the controller 26 determines whether or not the operation performed by the user is the predetermined gesture to instruct turning the power of the image display device 10 off (hereinbelow termed a "shutdown gesture"). When the operation performed by the user is determined as being the predetermined shutdown gesture, the controller 26 determines YES in S20, proceeds to S24, and turns off the power of the image display device 10. In this case, the display device process of FIG. 3 is completed. On the other hand, when the operation performed by the user is determined as being an operation other than the predetermined shutdown gesture, the controller 26 determines NO in S20 and proceeds to S22.

In S22, the controller 26 performs a process corresponding to the operation. For example, when the operation performed by the user is an operation to move a display position of the menu object image 80 (see FIG. 6), the controller 26 changes the display position of the menu object image 80 according to the user's operation. In this case, the display unit 14 displays a screen in a state where the menu object image 80 is arranged at the position after the change. Further, as shown in FIG. 6 for example, when the operation performed by the user is an operation to select an icon 90 of the manual app in the menu object image 80 (for example, an operation of touching the icon 90), the controller 26 activates the manual app according to the user's operation. When the manual app is activated, the controller 26 initiates the manual process of FIG. 7. Contents of the manual process will be described later in detail.

The controller 26 returns to S18 after completing S22, and monitors the user's operation being performed again. Due to this, each time the user performs an operation such as performing a gesture in the specific range or changing the direction of the user's view, the controller 26 changes display positions and manners of the object images and the guide image displayed in the display unit 14 in accordance with the operation. The controller 26 repeatedly executes the respective processes of S18 to S22 until the shutdown gesture is performed (YES in S20).

### (Manual process; FIG. 7)

The manual process performed by the controller 26 of the image display device 10 will be described with reference to FIG. 7. As described above, when the manual app is activated by the user's operation, the controller 26 initiates the manual process.

In S50, the controller 26 identifies features of an article existing in a specific range (hereinbelow may be termed a "target article") based on the first captured image from the first camera 16 and the second captured image from the second camera 18. Specifically, in S50, the controller 26 identifies the features of the target article (such as a shape, color, material, etc.) based on images of the target article included in the first captured image and the second captured image.

In subsequent S52, the controller 26 specifies an article ID of the target article having the features identified in S50. Specifically, in S52, the controller 26 determines whether or not the article having the features identified in S50 is included in the article table 32 in the memory 28. As shown in FIG. 8, the article table 32 includes a plurality of combination information 102, 104, 106 in which an article ID (such as "article PI") and feature data are associated. The feature data includes data characterizing an article, such as the shape, material, color, and the like of the article corresponding to an article ID. The controller 26 specifies the combination information including the feature data indicating similar features based on the features identified in S50. Then, the controller 26 specifies the article ID included in the specified combination information. When the article ID is specified, the controller 26 proceeds to S54. On the other hand, in a case where the article ID was not specified in S52 (that is, in a case where the article having the features identified in S50 is not included in the article table 32), the controller 26 terminates the manual process as a termination by error.

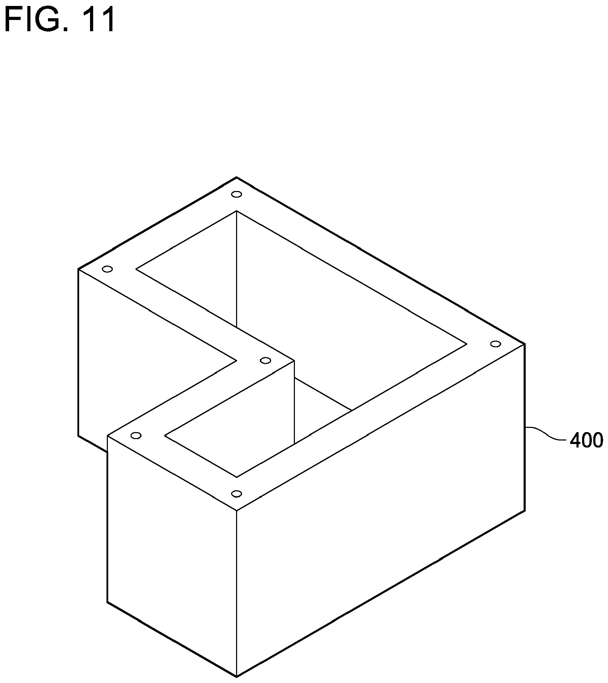

For example, in a case where the target article has the shape shown in FIG. 11 and is a white box 400 made of resin, the controller 26 specifies combination information 102 including feature data indicating similar features to the features of the box 400 in S52. Then, the controller 26 specifies the article ID "P1" included in the specified combination information 102.

In S54, the controller 26 reads a manual corresponding to the article ID specified in S52 from the manual data 34 (see FIG. 2). As aforementioned, the manual data 34 includes plural manuals. The manual data 34 includes the manuals for explaining the handling method of the articles corresponding to the article IDs (for example, methods of assembly, disassembly, repair, etc.) for the respective article IDs.

In subsequent S55, the controller 26 creates a procedure list using the manual read in S54. FIGS. 9 and 10 respectively show examples of the procedure list.

A procedure list 200 in FIG. 9 is an example for a case where the article ID "P1" (see the combination information 102 in FIG. 8) is specified in S52. The procedure list 200 includes the ID "D1" of the image display device 10, a creation time of the procedure list 200 ("2015.Dec.18 10:00"), and a latest updated time of the procedure list 200 ("2015.Dec.18 10:25"). Further, the procedure list 200 includes a procedure table 202 that combines a procedure column indicating procedures for handling the article with the article ID "P1" ("cover the lid", "tighten the screws", etc.) and a result column indicating a result ("OK", "NG", etc.) of whether an operation following each of the procedures was operated. At a timepoint when the procedure list 200 is created in S55, the result column includes "NG" meaning that the operations following the corresponding procedures are not yet performed.

A procedure list 300 in FIG. 10 is an example for a case where an article ID "P2" (see the combination information 104 in FIG. 8) is specified in S52. A basic structure of the procedure list 300 is same as the procedure list 200 of FIG. 9. The procedure list 300 includes a procedure table 302 that combines a procedure column indicating procedures for handling an article with the article ID "P2" and a result column indicating a result of whether an operation following each of the procedures was completed. Contents of the procedures included in the procedure table 302 are different from contents of procedures included in the procedure table 202 of FIG. 9.

Although not shown in FIG. 7, after the procedure list is created in S55, the controller 26 is capable of displaying a screen showing the procedure list on the display unit 14 at an arbitrary timing even before completion of work in accordance with user's operation.

In subsequent S56, the controller 26 determines whether or not an arranging direction of the target article existing in the specific range matches a specific arranging direction designated by the manual read in S54. In a case where the arranging direction of the target article matches the specific arranging direction, the controller 26 determines YES in S56 and proceeds to S58. On the other hand, in a case where the arranging direction of the target article does not match the specific arranging direction, the controller 26 determines NO in S56 and proceeds to S57. In S57, the controller 26 displays a message for prompting the user to change the arranging direction of the target article to the specific arranging direction on the display unit 14. After S57, the controller 26 returns to the determination of S56.

In S58, the controller 26 causes the display unit 14 to display an instruction screen for instructing to perform a first procedure according to the procedure list created in S55.

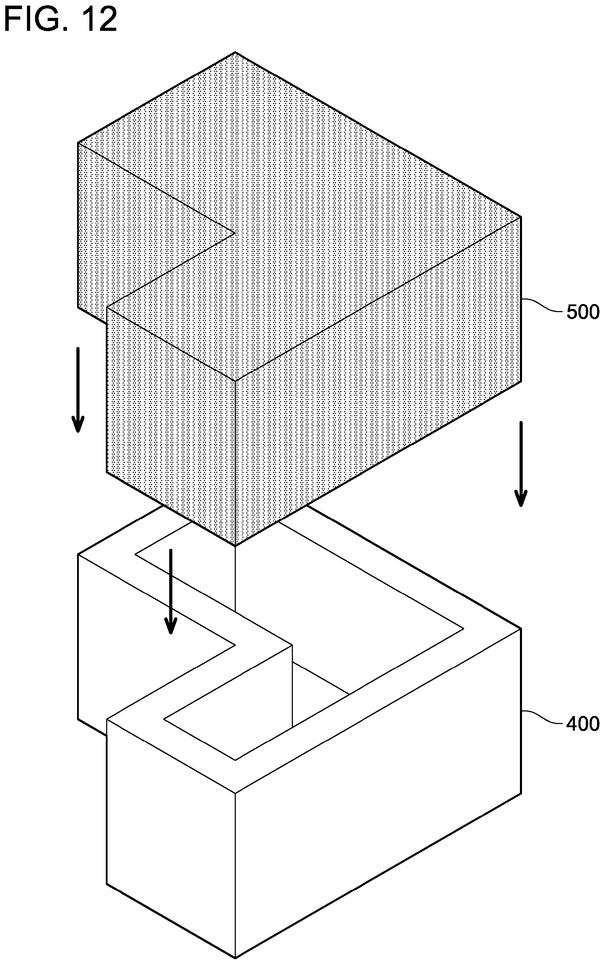

For example, in the case where the article ID "P1" (see the combination information 102 in FIG. 8) is specified in S52, the target article is the box 400 shown in FIG. 11. In this case, as shown in the procedure table 202 of the procedure list 200 of FIG. 9, the first procedure thereof is "cover the lid". Due to this, as shown in FIG. 12, in a case where the target article (that is, the box 400) exists in the specific range, the controller 26 causes the display unit 14 to display the instruction screen in which an object image 500 for explaining the procedure "cover the lid" is incorporated in an article image of the target article (that is, a reality image) in S58. As shown in FIG. 12, the object image 500 includes an image which virtually shows a lid and images of arrows for instructing the virtual lid to be covered over an opening of the box 400. The image of the lid is shown in a different color from the box 400 for the user to easily recognize it. As above, the instruction screen of FIG. 12 is a screen for instructing to "cover the lid" on the opening of the box 400 being the target article.

Then, in S60, the controller 26 monitors an actual operation following the procedure instructed in the instruction screen shown in S58 (which may hereinbelow be termed "specific procedure") to be operated. The controller 26 determines whether or not the operation following the specific procedure has been performed based on at least one of the first captured image, the second captured image, and action information sent from the tool 40. In determining that the operation following the specific procedure has been performed, the controller 26 determines YES in S60 and proceeds to S62. The controller 26 does not determine YES in S60 while the determination that the operation following the specific procedure is not performed is made. Here, cases where the controller 26 determines that "the operation following the specific procedure is not performed" include various cases for example in which a component to be attached is incorrect, a screw tightening torque value is lower than a predetermined value, an incorrect operation had been performed, and the like.

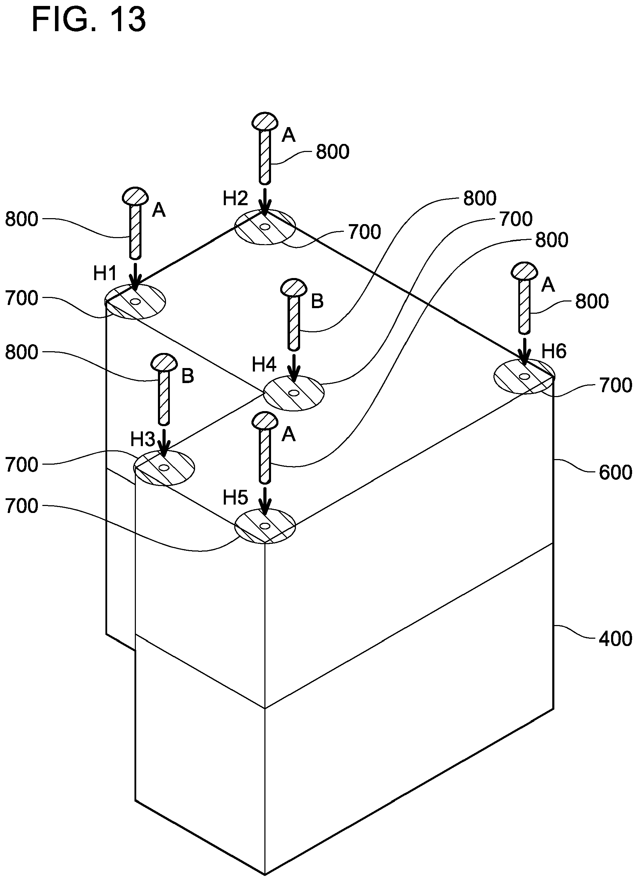

For example, in the case where the instruction screen of FIG. 12 is displayed in S58 (that is, "cover the lid" over the opening of the box 400 is being instructed), the controller 26 monitors a lid (see a reference sign 600 in FIG. 13) to be actually covered over the opening of the box 400 in S60. The user can cover the real lid over the opening of the box 400 while looking at the instruction screen of FIG. 12. In determining that the lid was actually covered over the opening of the box 400 as instructed by the instruction screen based on the first captured image and the second captured image, the controller 26 determines YES in S60 and proceeds to S62.

In S62, the controller 26 updates the procedure list. That is, the controller 26 records that the operation following the procedure instructed by the instruction screen of S58 was performed in the procedure list created in S55.

For example, in the case where the instruction screen of FIG. 12 is displayed in S58 (that is, "cover the lid" over the opening of the box 400 is being instructed), the controller 26 changes the result corresponding to the procedure "cover the lid" in the procedure table 202 of the procedure list 200 (FIG. 9) from "NG" to "OK" in S62. Further, the controller 26 updates the latest updated time.

In subsequent S64, the controller 26 determines whether or not all of the procedures have been completed. Specifically, the controller 26 determines whether all of the procedures indicated by the procedure list created in S55 have been completed (that is, whether "OK" is included in their result column). In a case where all of the procedures indicated by the procedure list created in S55 have been completed, the controller 26 determines YES in S64 and proceeds to S66. On the other hand, in a case where all of the procedures indicated by the procedure list created in S55 are not yet completed at the timepoint of S64, the controller 26 determines NO in S64 and returns to S58. In this case, the controller 26 repeatedly performs the processes of S58 to S62 until YES is determined in S64.

Detailed description will be given according to a specific example. For example, in the case where the result corresponding to the procedure "cover the lid" in the procedure table 202 of the procedure list 200 (FIG. 9) is changed from "NG" to "OK" in S62, all of the procedures indicated by the procedure list 200 are not yet completed at the timepoint of S64. Due to this, the controller 26 determines NO in S64 and returns to S58. In S58 of a second cycle, the controller 26 causes the display unit 14 to display an instruction screen for explaining the procedure (tighten the screws) (see FIG. 13) which is a subsequent procedure of the procedure "cover the lid", based on the procedure list 200 (see FIG. 9). As shown in FIG. 13, in this instruction screen, object images 700 for displaying screw holes H1 to H6 with emphasis and object images 800 for instructing screws to be threaded into the screw holes H1 to H6 are displayed by being incorporated in the article image of the target article (which is in this case the box 400 and the lid 600). The object images 700 are displayed together with letters "HI" to "H6" so that the screw holes H1 to H6 can be distinguished. The object images 800 are displayed together with letters "A" or "B" so that types of the screws (screw A and screw B) can be distinguished.

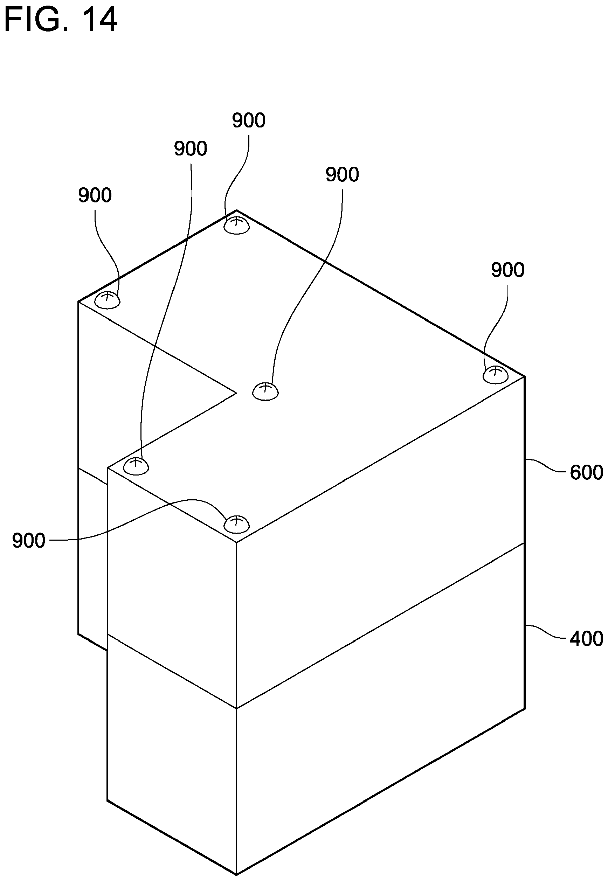

At this occasion, in S60 of the second cycle, the controller 26 monitors the screws being actually threaded into the screw holes H1 to H6. The user can thread the actual screws into the screw holes H1 to H6 using the tool 40 while looking at the instruction screen of FIG. 13. At this occasion, the user threads in the appropriate types of screws (screw A or screw B) adapted to the screw holes H1 to H6. In this example, the screw A is adapted to the screw holes H1, H2, H5, H6 and the screw B is adapted to the screw holes H3, H4. At this occasion the tool 40 detects the torque values upon when the user tightens the respective screws, and sends the action information including the detected torque values to the image display device 10 via the BT I/F 46. The controller 26 receives the action information via the BT I/F 22. The controller 26 determines whether or not the screws were correctly threaded into the screw holes H1 to H6 by the predetermined tightening torque values based on the first captured image, the second captured image, and the action information. In determining that the screws were correctly threaded into the screw holes H1 to H6 by the predetermined tightening torque values based on the first captured image, the second captured image, and the action information, the controller 26 determines YES in S60 and proceeds to S62. In this case, as shown in FIG. 14, a target article in which the lid 600 is covered on the box 400 and is fixed by six screws 900 is completed.

In this case, in subsequent S62 in the second cycle, the controller 26 changes the results corresponding to the procedure "tighten the screws" in the procedure table 202 of the procedure list 200 (FIG. 9) from "NG" to "OK". In the procedure table 202 of FIG. 9, the result column is provided for each screw hole, so the controller 26 changes the respective results in the result column from "NG" to "OK". Further, the controller 26 updates the latest updated time. Due to this, as shown in FIG. 9, the procedure list 200 in which "OK" is recorded in all of the result column of the procedure table 202 is completed. In this case, the controller 26 determines YES in subsequent S64 in the second cycle and proceeds to S66.

In S66, the controller 26 stores the completed procedure list in the list storage region 36 of the memory 28.

In subsequent S68, the controller 26 creates work information including the procedure list stored in the list storage region 36 and sends the same to the server 50 via the Wi-Fi I/F 24. The work information includes various types of information (such as sending time, etc.) in addition to the procedure list. When S68 is completed, the controller 26 terminates the manual process of FIG. 7.

Although not shown in FIG. 7, there may be a case where the user performs a predetermined termination operation in the specific range or interrupts the work by moving the target article to outside the specific range after the procedure list is created in S55 and before determining YES in S64 (that is, before all the procedures are completed). In such a case, the controller 26 forces to interrupt process execution and proceeds to S66 no matter which process of S55 to S64 is being performed. In this case, in S66, the controller 26 stores the procedure list at this timepoint in the list storage region 36 of the memory 28. For example, the controller 26 stores the procedure list including "NG" in the result column as in the procedure list 300 of FIG. 10 in the list storage region 36. Then, in S68, the controller 26 creates the work information including the procedure list stored in the list storage region 36 and sends the same to the server 50 via the Wi-Fi I/F 24. Then, the controller 26 terminates the manual process of FIG. 7.

As above, the execution of the manual process of FIG. 7 causes the procedure list to be stored in the list storage region 36 of the memory 28. The user of the image display device 10 can perform an operation to browse the procedure list in the list storage region 36. In this case, the controller 26 reads the procedure list designated by the user from the list storage region 36 and can cause the display unit 14 to display a screen indicating the procedure list. The user can see the procedure list displayed on the display unit 14 to confirm whether or not the target article was properly handled.

### (Processes by controller 58 of server 50)

Next, processes performed by the controller 58 of the server 50 will be described. As aforementioned, the controller 26 of the image display device 10 performs the manual process (see FIG. 7), by which the work information is sent from the image display device 10 to the server 50. The controller 58 of the sever 50 receives the work information via the Wi-Fi I/F 56. The controller 58 stores the received work information in the memory 60.

Further, the user of the server 50 can input a browse request for browsing the work information in the memory 60 to the server 50 by operating the operation unit 54. When the browse request is inputted, the controller 58 reads the work information designated by the browse request from the memory 60 and causes the display unit 52 to display a screen represented by the work information. In this case, the screen represented by the work information includes information similar to the procedure list (see FIGS. 9 and 10).

Due to this, the user of the server 50 can see the screen displayed on the display unit 52 to confirm whether or not the target article was handled properly by the user of the image display device 10.

Further, the user of the external PC 70 can input an operation for browsing the work information in the server 50 to the external PC 70 by operating the operation unit 72. In this case, the controller 74 of the external PC 70 can send a request signal for browsing the work information in the memory 60 to the server 50 via the Wi-Fi I/F 73. In this case, the controller 58 receives the request signal via the Wi-Fi I/F 56. Then, the controller 58 reads the work information designated by the request signal from the memory 60, and sends the read work information to the external PC 70 via the Wi-Fi I/F 56.

The controller 74 of the external PC 70 receives the work information via the Wi-Fi I/F 73. Then, the controller 74 can cause the display unit 71 to display a browsing screen represented by the received work information. In this case as well, the browsing screen represented by the work information includes the information similar to the procedure list (see FIGS. 9 and 10). Due to this, the user of the external PC 70 can also see the screen displayed on the display unit 71 to confirm whether or not the target article was handled properly by the user of the image display device 10.

### (Effects of embodiment)

As above, the configuration and actions of the communication system 2 of the present embodiment were described. As aforementioned, in the present embodiment, the controller 26 of the image display device 10 determines whether or not the operation that the user actually performed on the target article within the specific range follows the procedure instructed by the instruction screen (S60 of FIG. 7) based on the first captured image and the second captured image while the instruction screen (for example, see FIG. 12) is displayed on the display unit 14. The controller 26 can record the result thereof in the procedure list and store the same in the memory 28 (S66). Due to this, the users and the like of the image display device 10 and the like can browse through the procedure list stored in the memory 28 to confirm whether or not the target article was handled according to the procedures indicated by the manual.

In the present embodiment, when the operation following the specific procedure instructed by the instruction screen (see FIG. 12) is performed (YES in S60), the controller 26 of the image display device 10 causes the display unit 14 to display the instruction screen for instructing a procedure subsequent to the specific procedure (see FIG. 13). That is, the controller 26 does not cause the display unit 14 to display the instruction screen for instructing the subsequent procedure in the case of determining that the specific procedure is not completed (NO in S60). Due to this, a possibility by which the user of the image display device 10 can properly handle the target article according to the procedures indicated by the manual becomes higher.

Further, in the present embodiment, the controller 26 of the image display device 10 receives the action information including the torque values by which the user tightened the screws from the tool 40 via the BT I/F 22. Due to this, the controller 26 determines whether or not the screws were correctly threaded into the screw holes H1 to H6 by the predetermined tightening torque values based on the action information received from the tool 40 in addition to the first captured image and the second captured image (S60). Due to this, the controller 26 can properly determine whether or not the screws were threaded into the screw holes H1 to H6 correctly at the predetermined tightening torque.

Further, in the present embodiment, the controller 26 of the image display device 10 creates the work information including the procedure list stored in the list storage region 36, and sends the same to the server 50 via the Wi-Fi I/F 24 (S68). Due to this, the work information is accumulated in the server 50. The user of the server 50 and the users and the like of the external PC 70 and the like can confirm whether or not the target article was properly handled by seeing the screen represented according to the work information accumulated in the server 50.

### (Correspondence Relationships)

The procedure "cover the lied" in the procedure table 202 of FIG. 9 is an example of a "first procedure". The object image 500 in FIG. 12 is an example of a "first object image". The instruction screen of FIG. 12 is an example of a "first instruction screen". The procedure "tighten the screws" in the procedure table 202 of FIG. 9 is an example of a "second procedure". The object images 700, 800 in FIG. 13 are examples of a "second object image". The instruction screen of FIG. 13 is an example of a "second instruction screen". The BT I/F 22 is an example of a "receiving unit". The Wi-Fi I/F 24 is an example of a "sending unit".

### (Second embodiment of image display device)

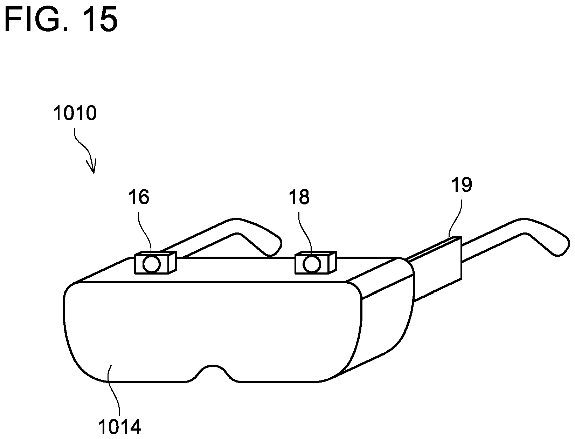

An image display device 1010 of a second embodiment will be described with reference to FIG. 15 by describing mainly of points that differ from the first embodiment. This embodiment differs from the first embodiment in that a display unit 1014 is a light-shielding display, which blocks user's view when the user wears the image display device 1010. Other constituent features are substantially same as those of the first embodiment.

As aforementioned, in the present embodiment, since the display unit 1014 is a light-shielding display, when power of the image display device 1010 is turned on, the controller 26 causes the first captured image (that is, the captured image from the first camera 16) to be displayed in a region facing the right eye of the user and causes the second captured image (that is, the captured image from the second camera 18) to be displayed in a region facing the left eye of the user. Then, for example, in the case where the arrangement position of the menu object image 80 is included in the specific range, the controller 26 causes the display unit 1014 to display a screen in which the menu object image 80 is composed over the first captured image and the second captured image.

As aforementioned, details of the embodiments have been described, however, these are merely an illustration, and do not restrict the scope of claims. Techniques described in claims encompass various variants and modifications of the specific examples illustrated above. For example, the following variants may be employed.
(Variant 1) In the second embodiment, the controller 26 displays the first captured image in the region facing the right eye of the user and the second captured image in the region facing the left eye of the user. Not being limited hereto, the controller 26 may display one of the first captured image and the second captured image on the display unit 1014. Further, the controller 26 may display an image that is made by composing the first captured image and the second captured image on the display unit 1014.
(Variant 2) In the respective embodiments as above, the controller 26 monitors the detection of the user operation in the specific range in S18 of FIG. 3, however, the "user operation" referred hereof is not limited to the gesture which the user performs on the object image such as the menu object image, the movement of the user within the space, and the changes in the direction of the view of the user, and may include an operation in which the user uses the input unit (input key, etc.) to input information. In this case, the image display devices 10, 1010 may further include the input unit.
(Variant 3) In the respective embodiments as above, the controller 26 initiates the real-time process (S14) after having executed calibration (YES in S10, S12 of FIG. 3). Not being limited hereto, the controller 26 may initiate the real-time process together with the execution of the calibration. In this case, the "first calibration image" and the "first captured image" may be an identical image. Similarly, the "second calibration image" and the "second captured image" may be an identical image.
(Variant 4) In the respective embodiments as above, both the image display devices 10, 1010 have a support frame that is substantially in the shape of glasses, and they can be worn on the head of the user similar to how the glasses are worn. Not being limited to this, the image display device may have an arbitrary support frame, such as in a hat shape, a helmet shape, and the like so long as it is wearable on the head of the user.
(Variant 5) The image display device may be configured by attaching the first camera 16, the second camera 18, and the control box 19 on an eyewear generally used for an orthoptic purpose or for eye protection (such as glasses, sunglasses, etc.). In this case, lens portions of the eyewear may be used as the display unit.
(Variant 6) In each of the above embodiments, the controller 26 identifies the features of the target article based on the first and second captured images (S50 in FIG. 7), and then specifies the article ID of the target article having the identified features based on the article table 32 (see FIG. 8) (S52). A method by which the controller 26 specifies the article ID of the target article is not limited to the above, and various other arbitrary methods may be employed. For example, an information code in which the article ID is registered may be given in advance to the target article, and the controller 26 may specify the article ID by decoding the information codes included in the first and second captured images.
(Variant 7) The tool 40 is not limited to the screw-turning tool (so-called screwdriver) that the user uses by holding it, and other arbitrary types of tools (such as a wrench or Vernier caliper, etc.). In such a case as well, the tool 40 simply needs to be configured capable of sending the action information to the image display device 10.
(Variant 8) In each of the above embodiments, the respective object images being the menu object image 80 (FIG. 6), the object images 500, 700, 800 (FIGS. 12 and 13), are all displayed as still images. Not being limited hereto, the respective object images may be displayed as video images (that is, images in which at least a part thereof operates in animation display).
(Variant 9) In each of the above embodiments, in the case of being determined that the specific procedure is not completed (NO in S60 of FIG. 7), the controller 26 continues to display the instruction screen for instructing to perform the specific procedure (that is, the screen including the object image). Not being limited hereto, the controller 26 may terminate the display of the instruction screen even in a case where it is determined that the specific procedure is not completed if a predetermined condition is met (for example, a predetermined time has elapsed since a start of the display of the instruction screen, or at least a part of the operation in the specific procedure is completed). This variant is also an example in which the controller 26 "causes the display unit to display an instruction screen".
(Variant 10) In each of the above embodiments, the controller 26 monitors the operation indicated by the specific procedure to be actually performed (that is, completed) in S60 of FIG. 7. Not being limited hereto, in S60 of FIG. 7, the controller 26 may further determine, in addition to whether or not the operation indicated by the specific procedure has been completed, where at the work stage of the operation indicated by the specific procedure the work currently is (such as not performed, in progress, completed, etc.).
(Variant 11) In each of the above embodiments, the procedure tables 202, 302 in the procedure lists 200, 300 (FIGS. 9 and 10) have the procedure column indicating the procedures for handling the article with the article ID "P1" (such as "cover the lid" and "tighten the screws") combined with the result column indicating the results ("OK", "NG", etc.) on whether or not the operations following the procedures were performed. The procedure tables 202, 302 may further have a remarks column further combined in addition to the procedure column and the result column. The remarks column may record, for example, a reason why the result is "NG", and other various types of information. In this case, in determining that the operation indicated by the specific procedure is not completed in S60 of FIG. 7, the controller 26 may further determine the reason why the operation indicated by the specific procedure is not completed (for example, a screw to be threaded in does not exist in a surrounding, the torque for tightening the screw does not reach a predetermined value, etc.). In this case, the controller 26 may record the reason why it is determined that the operation indicated by the specific procedure is not completed in the remarks column of the procedure tables 202, 302. In this variant, the work information created in S68 of FIG. 7 may further include information recorded in the remarks column.
(Variant 12) In each of the above embodiments, in the case of being determined that the specific procedure is not completed (NO in S60 of FIG. 7), the controller 26 does not allow the instruction screen for instructing to perform the next procedure to be displayed on the display unit 14. Not being limited to this, the controller 26 may cause the display unit 14 to display the instruction screen for instructing to perform the next procedure according to user's operation even before the completion of the specific procedure. Further, the controller 26 may display an instruction screen of a previous procedure that is already completed according to user's operation even during when the instruction screen for instructing to perform the specific procedure is displayed in the display unit 14.
(Variant 13) The plural procedures indicated by the handling method of the target article indicated by the manual may include a procedure that can be skipped (that is, a procedure which does not adversely affect the handling of the target article even if this procedure is not completed). Such a skippable procedure may include optional procedures, such as "cleaning the surrounding between working steps", "adhere a decorative sticker on a surface of the target article", and the like. In this case, the controller 26 may cause the display unit 14 to display an instruction screen for instructing to perform a next step according to user's operation while displaying an instruction screen for instructing to perform the skippable procedure on the display unit 14, even before the completion of the skippable procedure.

Further, technical elements described in this description and drawings exhibit technical usefulness solely or in combination thereof, and are not limited to combinations recited in the claims as originally filed. Further, the art described in the description and the drawings may concurrently achieve a plurality of aims, and technical significance thereof resides in achieving any one of such aims.

## Claims

1. An image display device configured to be used by being worn on a head of a user, the image display device comprising:
a display unit;
a first camera configured to capture a specific range corresponding to a range of view of the user;
a second camera provided in a different position from the first camera, and configured to capture the specific range;
a sensor configured capable of detecting a posture of the image display device;
a controller; and
a memory configured to store a manual related to handling of a target article,
wherein the controller is configured to:
specify spatial information for specifying features of a space around the image display device based on a first calibration image acquired from the first camera and a second calibration image acquired from the second camera;
specify a position and a posture of the image display device in the space based on the spatial information, a first captured image acquired from the first camera, a second captured image acquired from the second camera, and the posture of the image display device detected by the sensor;
cause the display unit to display a first instruction screen in a case where the target article is included in the specific range, the first instruction screen including a first object image in combination with the target article, the first object image indicating a first procedure for handling the target article in accordance with the manual stored in the memory;
determine whether an operation that the user actually performed on the target article in the specific range follows the first procedure or not based on the first captured image and the second captured image while the first instruction screen is displayed on the display unit; and
cause the memory to store a result of the determination.

2. The image display device as in claim 1, wherein
the controller is configured to cause the display unit to display a second instruction screen instead of the first instruction screen in a case where it is determined that the operation follows the first procedure, the second instruction screen including a second object image in combination with the target article, the second object image indicating a second procedure to be performed after the first procedure in accordance with the manual stored in the memory.

3. The image display device as in claim 1 or 2, further comprising:
a receiving unit configured to receive action information related to an action content of a tool from the tool,
wherein the operation includes an operation of using the tool, and
the controller is configured to determine whether the operation follows the first procedure or not based on the first captured image, the second captured image, and the action information acquired from the receiving unit while the first instruction screen is displayed on the display unit.

4. The image display device as in any of claims 1 to 3, further comprising:
a sending unit configured to send work information including the result of the determination stored in the memory to an external server.

5. A computer program for a terminal device being capable of communicating with the external server that stores the work information sent by the image display device as in claim 4,
wherein the terminal device comprises a display unit and a computer, and
the computer program causes the computer to perform:
receiving the work information from the external server by communicating with the external server; and
causing the display unit to display a browsing screen represented by the received work information.
